# NEUE EUROPÄISCHE PATENTSCHRIFT

(11) **EP 1 634 735 B2**
(45) Veröffentlichungstag und Bekanntmachung des Hinweises auf die Entscheidung über den Einspruch: **31.07.2013**
(45) Hinweis auf die Patenterteilung: 21.11.2007
(21) Anmeldenummer: 04292186.6
(22) Anmeldetag: 10.09.2004
(51) Int. Cl.: B60H 1/00

(54) **Modulare Kraftfahrzeugklimaanlage**
Modular air-conditioning for a vehicle
Appareil de climatisation modulaire pour véhicule

(43) Veröffentlichungstag der Anmeldung: 15.03.2006
(73) Patentinhaber: Behr France Rouffach SAS, 68250 Rouffach (FR)
(72) Erfinder: Fuentes, Céline, 68124 Logelbach (FR); Jesslen, Jean-Luc, 68500 Berrwiller (FR); Klein, Henri, 68000 Colmar (FR); Ludmann, Eric, 68320 Holtzwihr (FR)
(74) Vertreter: Grauel, Andreas

(56) Entgegenhaltungen:
- DE-A1- 10 037 384
- JP-A- 2001 010 329
- US-A1- 2004 016 536

## Beschreibung

Die Erfindung betrifft eine Kraftfahrzeug-Klimaanlage, wobei ein Teil des Gehäuses für verschieden-zonige Klimaanlagen unterschiedlich ausgebildet ist, und zumindest die Anordnung eines Gebläse, eines Verdampfers und eines Heizers bei den verschieden-zonigen Klimaanlagen gleich ist, wobei das Gehäuse der Klimaanlage für verschiedene Versionen variiert ausgebildet und/oder durch Anbau- oder Austauschteile verändert sein kann.

Aus der DE 103 45 188 A1 ist eine Fahrzeug-Klimaanlage bekannt, bei der zur unabhängigen Steuerung von den Temperaturen der Luft, die auf die Vorder- und Rücksitzbereiche einer Fahrgastzelle geblasen wird, eine vordere Luftmischklappe aus einer Folienklappe mit einer Öffnung gebildet ist, durch welche Luft hindurchtritt. Die vordere Luftmischklappe öffnet und schließt einen vorderen Kühlluftumgehungsdurchlass und einen vorderen Luftdurchlass eines Heizwärmetauschers. Eine Wickelwelle zum Aufwickeln und Abwickeln der Folienklappe ist in einem Trennabschnitt angeordnet, der zwischen dem vorderen und einem hinteren Luftdurchlass des Heizwärmetauschers zu liegen kommt. Eine hintere Luftmischklappe ist außerdem als Plattenklappe gebildet, die um eine Drehwelle drehbar ist. Eine derartige Ausgestaltung dient der Verringerung der Baugröße der mehrzonigen Fahrzeug-Klimaanlage.

Auf Grund der relativ geringen Stückzahlen bei Mehrzonen-Klimaanlagen für Kraftfahrzeuge sind deren Kosten stets relativ hoch, wohingegen die Kosten für einzonige Klimaanlagen in Folge der sehr großen Stückzahl vergleichsweise sehr gering sind.

Um von den geringeren Herstellungskosten der 1- und 2-zonigen Klimaanlagen zu profitieren, ist aus der DE 100 37 384 A1 eine Kraftfahrzeug-Klimaanlage bekannt, bei der an einem einfachen Grundmodul ein Zusatzmodul in Form einer Fondtemperierungseinheit angebracht werden kann, wofür das Klimatisierungsgehäuse des Grundmoduls eine mit einem Deckteil verschließbare Luftaustrittsöffnung aufweist. Die Fondtemperierungseinheit umfasst einen zweiten Wärmetauscher zur Temperierung der dem Fondbereich zuzuführenden Luft. Zusätzlich zur Front- und Fond-Auftrennung kann auch eine Rechts-Links-Auftrennung erfolgen, so dass Fahrer- und Beifahrerseite unabhängig temperiert werden können. Hierbei ist der zweite Wärmetauscher relativ teuer und erhöht auch das Gesamtgewicht der Klimaanlage deutlich.

Aus der US 2004/0016536 A1 ist eine weitere Klimatisierungseinrichtung für ein Kraftfahrzeug bekannt, welche einen modularen Einsatz aufweist, um unterschiedliche Zonen eines Innenraums zu versorgen. Der modulare Einsatz ist hierfür in Abhängigkeit der gewünschten Zonenanzahl unterschiedlich ausgebildet.

Die 7P2001-10329 A offenbart ebenso eine modulare klimaanlage.

Derartige Klimaanlagen lassen somit noch Wünsche, insbesondere auch in Hinblick auf die Herstellungskosten, offen.

Es ist Aufgabe der Erfindung, eine möglichst kostengünstige Kraftfahrzeug-Klimaanlage zur Verfügung zu stellen.

Diese Aufgabe wird gelöst durch eine mehrzonige Klimaanlage mit den Merkmalen des Anspruchs 1. Vorteilhafte Ausgestaltungen sind Gegenstand der Unteransprüche.

Erfindungsgemäß ist eine Klimaanlage, insbesondere Kraftfahrzeug-Klimaanlage, vorgesehen, wobei ein Teil des Gehäuses für verschieden-zonige Klimaanlagen unterschiedlich ausgebildet ist, und zumindest die Anordnung eines Gebläse, eines Verdampfers und eines Heizers bei den verschieden-zonigen Klimaanlagen gleich ist, wobei das Gehäuse der Klimaanlage für verschiedene Versionen variiert ausgebildet und/oder durch Anbau- oder Austauschteile verändert sein kann, und wobei bei einer mehrzonigen Ausgestaltung der Klimaanlage in einem Bereich des Gehäuses ein Bypass für den Fondbereich vorgesehen ist, der am Heizer vorbeiführt, wobei der Bypass in einem Bereich ausgebildet ist, der bei einer geringerzonigen Klimaanlage - in Hinblick auf die Funktion der Klimaanlage - ungenutzt ist. Dadurch, dass wesentliche Bereiche der Klimaanlage bei ihrer ein- oder zweizonigen Version identisch ausgebildet sind, wie bei ihrer mehrzonigen Version, können die Herstellungskosten, insbesondere für die mehrzonige Version, in Folge einer Vielzahl gleicher Teile und einer stark vereinfachten Auslegung verringert werden.

Bevorzugt ist mindestens eine Mischklappe vorgesehen, die als Schmetterlings-Klappe ausgebildet ist. Hierbei handelt es sich bevorzugt um die Mischklappe für den Fondbereich, wobei dieselbe auch im Falle einer fahrerseitigen und beifahrerseitigen Unterteilung der Fondzone unterteilt ausgebildet sein kann oder zwei Mischklappen vorgesehen sein können. Bevorzugt handelt es sich auch bei den Mischklappen für den Frontbereich um Schmetterlings-Klappen. Die Schmetterlings-Klappen benötigen relativ geringe Stellkräfte, so dass die Antriebsmotoren klein gehalten werden können. Zudem können - bei entsprechender Ausgestaltung - zwei voneinander beabstandete Öffnungen, wie beispielsweise der Eintritt und der Austritt in den Luftkanal, welcher die Luft durch den Heizer führt, verschlossen werden.

Erfindungsgemäß ist bei der mehrzonigen Klimaanlage im variiert ausgebildeten Teil des Gehäuses oder im Anbau- oder Austauschteil angeordnet eine Mischklappe zur Lufttemperierung für den Fondbereich vorgesehen. Insbesondere eine Unterteilung des Gehäuses ermöglicht eine einfachere Montage der Mischklappe. Im variiert ausgebildeten Teil des Gehäuses oder im Anbau- oder Austauschteil ist eine Defrost-Klappe für den Defrostbetrieb vorgesehen, vorzugsweise auch andere Klappen.

Der Bypass ist bevorzugt im in ein Kraftfahrzeug eingebauten Zustand der Klimaanlage räumlich unterhalb des Heizers verlaufend angeordnet. Dieser Bereich ist im Falle einer ein- oder zweizonigen, einfachen Basisversion der Klimaanlage in aller Regel ungenutzt, so dass dieser Bauraum für eine mehrzonige Klimaanlage zur Verfügung steht.

Im Folgenden wird die Erfindung anhand von Ausführungsbeispielen unter Bezugnahme auf die Zeichnung im Detail erläutert. In der Zeichnung zeigen:
- Fig. 1: einen schematischen Schnitt durch eine drei- oder vierzonige Kraftfahrzeug-Klimaanlage gemäß dem ersten Ausführungsbeispiel,
- Fig. 2: einen schematischen Schnitt durch die ein- oder zweizonige Basisversion der Klimaanlage von Fig. 1,
- Fig. 3: einen Schnitt durch die Klimaanlage von Fig. 1 bei normalem Mischbetrieb,
- Fig. 4: einen Schnitt durch die Klimaanlage von Fig. 1 bei Entfrost-Betrieb,
- Fig. 5: eine geschnittene Darstellung der Klimaanlage von Fig. 1 mit hervorgehoben dargestellten zusätzlichen Klappen der mehrzonigen Version,
- Fig. 6: eine perspektivische teiltransparente Darstellung der Klimaanlage von Fig. 1 mit hervorgehoben dargestellten zusätzlichen Klappen der mehrzonigen Version, und
- Fig. 7: eine Darstellung der Klappenöffnungswinkel der Klimaanlage von Fig. 1 bei verschiedenen Betriebsarten.

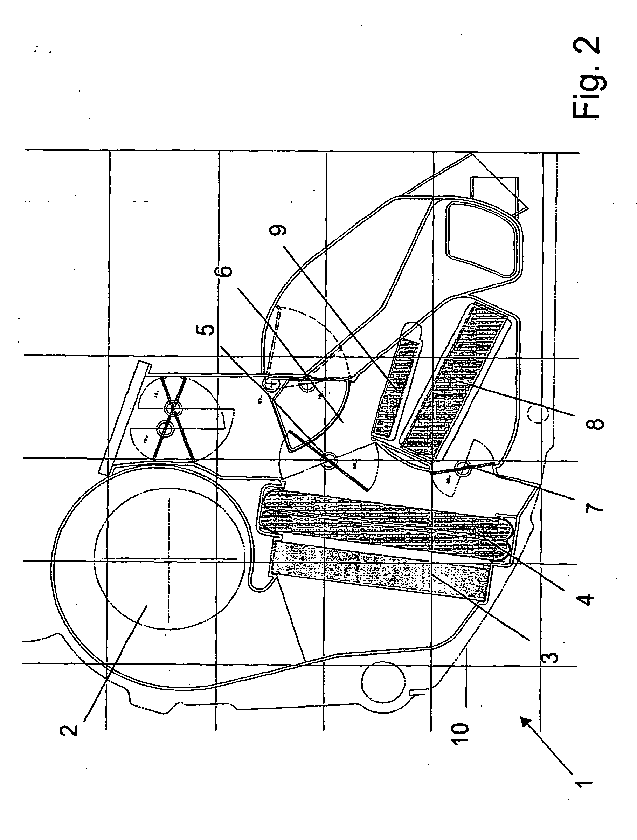

Eine Kraftfahrzeug-Klimaanlage 1 weist, wie in Fig. 2 dargestellt, in ihrer Basisversion, das heißt für eine ein- oder zweizonige Ausführungsform, ein gemäß dem vorliegenden Ausführungsbeispiel symmetrisches Gebläse 2, welches Luft aus der Umgebung und/oder dem Fahrzeuginnenraum ansaugt, einen dem Gebläse 2 nachgeordneten Filter 3 und einen Verdampfer 4 auf, welcher die vom Gebläse 2 kommenden Luft kühlt. Im Anschluss an den Verdampfer 4 erfolgt eine Aufteilung des Luftstroms. Je nach Bedarf kann der gesamte oder ein Teil des Luftstroms direkt dem Fahrzeuginnenraum zugeführt werden, wofür eine erste Mischklappe 5 in Form einer Schmetterlings-Klappe vorgesehen ist. Die Verteilung auf die einzelnen Luftausströmer, durch welche die Luft in den Fahrzeuginnenraum gelangt, erfolgt anschließend an einen Mischraum 6 mit Hilfe einer Mehrzahl von Klappen. Der restliche Luftstrom wird, geregelt durch eine zweite Mischklappe 7, welche ebenfalls als Schmetterlings-Klappe ausgebildet ist, durch einen Heizer 8 und einen elektrischen Zuheizer 9 geführt, in welchen dieser Luftstrom erwärmt wird. Anschließend gelangt dieser Luftstrom ebenfalls in den Mischraum 6, wo eine bedarfsgerechte Vermischung der Luftströme erfolgt. Die Klappen, welche den Luftstrom durch die Luftkanäle zum Fahrzeuginnenraum regeln, sind hierbei derart ausgebildet, dass auch eine Temperaturschichtung möglich ist.

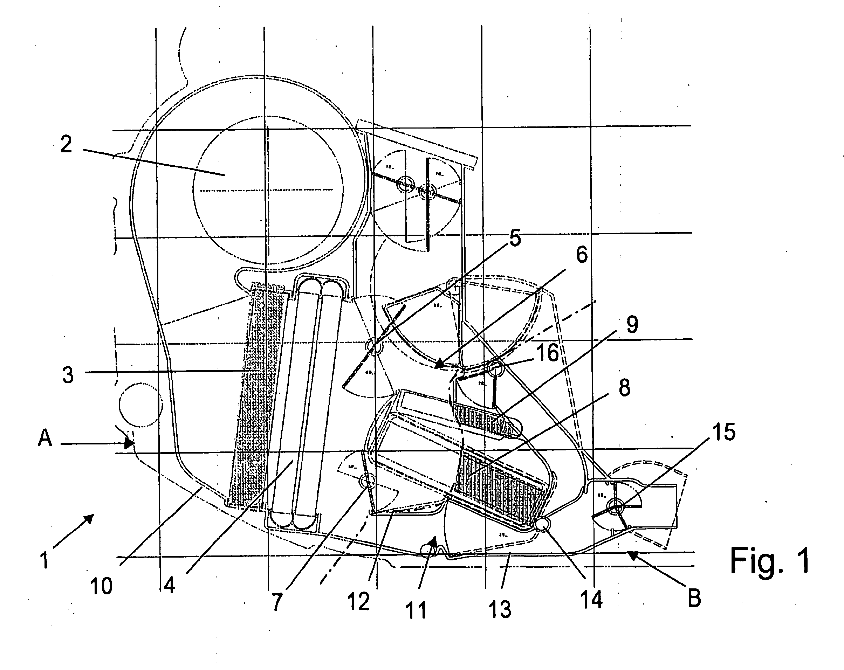

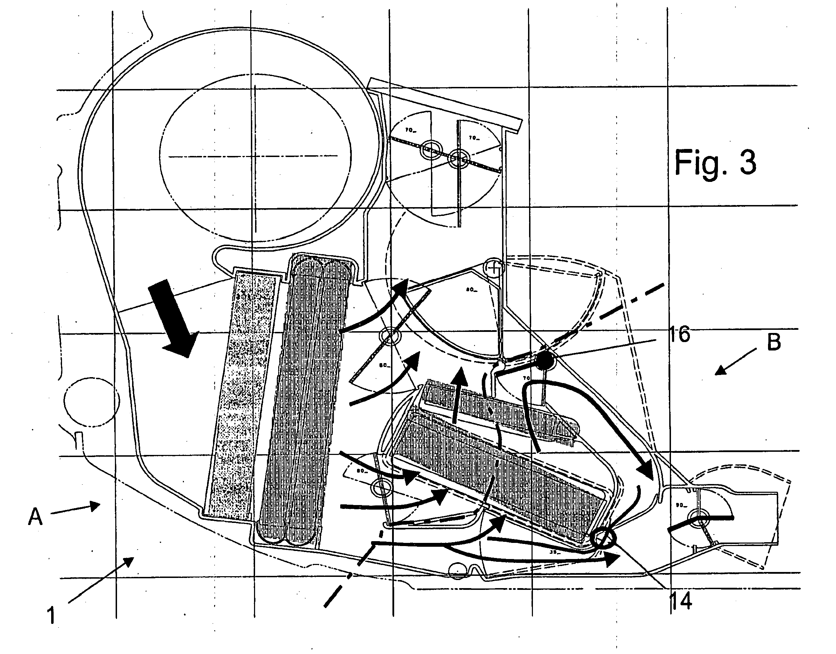

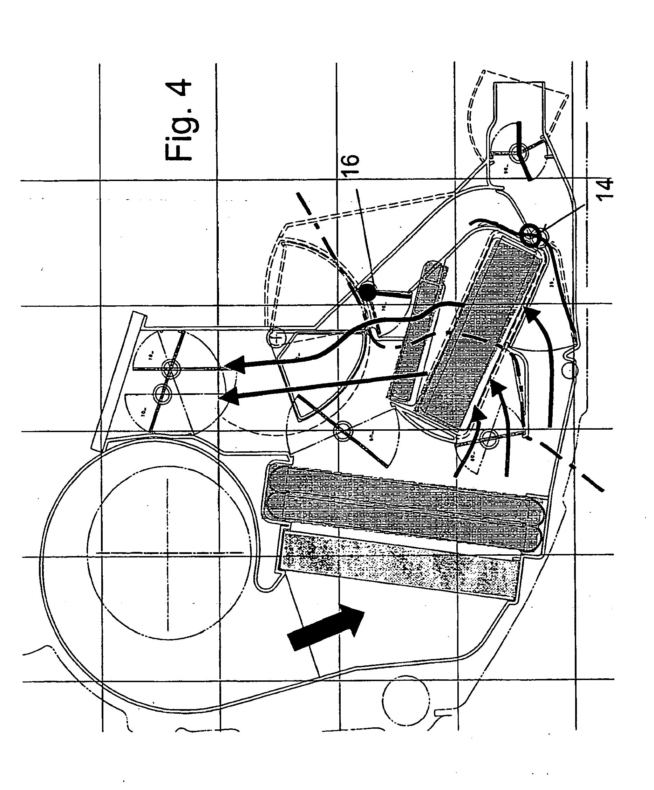

Für die drei- oder vierzonige Ausführungsform, die in Fig. 1 dargestellt ist, ist, soweit zuvor beschrieben, zumindest der Kernbereich der Kraftfahrzeug-Klimaanlage 1 gleich ausgebildet, das heißt unter anderem, dass die Einheit Gebläse 2, Filter 3, Verdampfer 4, Heizer 8 und Zuheizer 9 im Wesentlichen, das heißt abgesehen von zusätzlich vorgesehenen Trennwänden oder veränderten Wandverläufen, unverändert ist, und dass die gleichen Klappen verwendet werden, wie insbesondere die Mischklappen 5 und 7. Um aber die Zonenanzahl zu vergrößern, ist das Gehäuse 10 der Klimaanlage etwas abgeändert, vorliegend durch Austauschteile und zusätzliche Einbauten, und es sind zusätzliche Klappen vorgesehen, um die zusätzlichen Luftströme zu regeln. In den Figuren 3 und 4 deutet jeweils eine Strich-Punkt-Linie die Grenze zwischen dem Bereich, der identisch mit dem entsprechenden Bereich A der Basisversion ausgebildet ist, und dem Bereich B, in welchem Veränderungen vorgenommen wurden, an.

So wird ein Bereich 11 des Gehäuses 10, der im eingebauten Zustand räumlich unterhalb des Heizers 8 angeordnet und der bei der Basisversion ungenutzt ist, in Verbindung mit einem veränderten Verlauf der in diesem Bereich 11 angeordneten Gehäusewand, welche nunmehr als Trennwand 12 dient und den Heizer 8 und Zuheizer 9 in Hinblick auf den Strömungsverlauf etwa mittig zweiteilt, und einer bei der mehrzonigen Version zusätzlich vorgesehenen Außenwand 13, als zusätzlicher Luftkanal genutzt, durch welchen temperierte Luft dem Fondbereich zugeführt werden kann. Dieser Luftkanal ist derart ausgebildet, dass bei Bedarf die kalte Luft unter dem Heizer 8 durch und vorbei am Zuheizer 9, im Folgenden auch als Bypass bezeichnet, und/oder durch den Heizer 8 und den Zuheizer 9, im Folgenden als Warmluftkanal bezeichnet, geleitet werden kann. Im Bereich, in welchem der Bypass und der Warmluftkanal wieder zusammentreffen, ist ein Fond-Mischraum zur Mischung der kalten und warmen Luftströme vorgesehen. Für eine Mischstellung bei Normalbetrieb ist in Fig. 3 der Strömungsverlauf dargestellt. Die Regelung erfolgt mit Hilfe einer Mischklappe 14, die als Schmetterlings-Klappe ausgebildet ist. Ein Flügel der Mischklappe 14 verschließt im Betrieb "kalt" den Lufteintritt zum Heizer 8 und verschließt im Betrieb "maximal warm" den Bypass vorbei am Heizer 8 und Zuheizer 9, wobei der Flügel den Luftstrom zum Heizer 8 hin umlenkt. Der andere Flügel der Mischklappe 14 verschließt im Betriebszustand "kalt" das Ende des Luftkanals durch den Heizer 8 und Zuheizer 9, wobei es den durch den Bypass strömenden Luftstrom leitet, im Betriebszustand "maximal warm" liegt der Flügel an der Wand des Luftkanals an, die den Hinstrom durch den Heizer 8 und Zuheizer 9 von dem Rückstrom der erwärmten Luft trennt (vgl. Fig. 4).

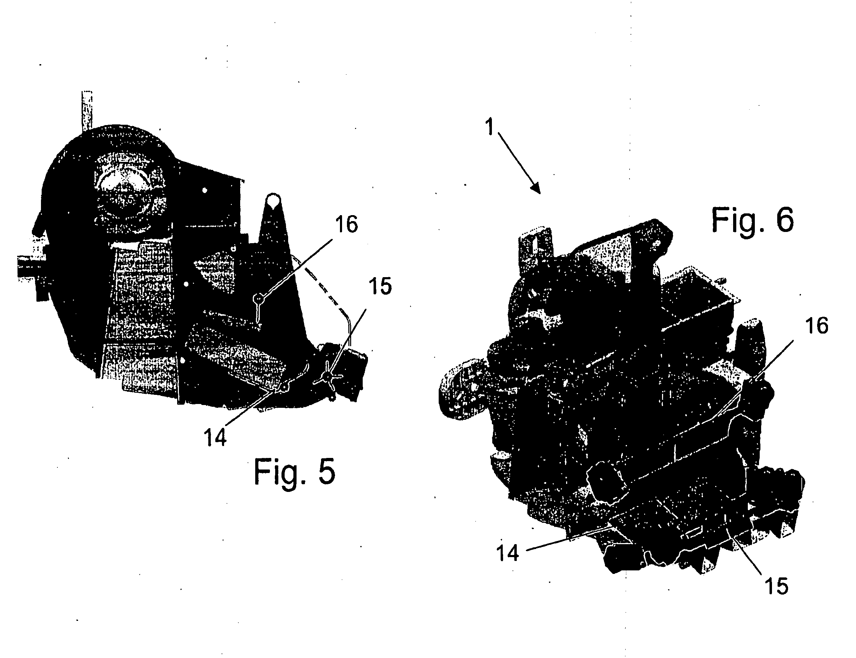

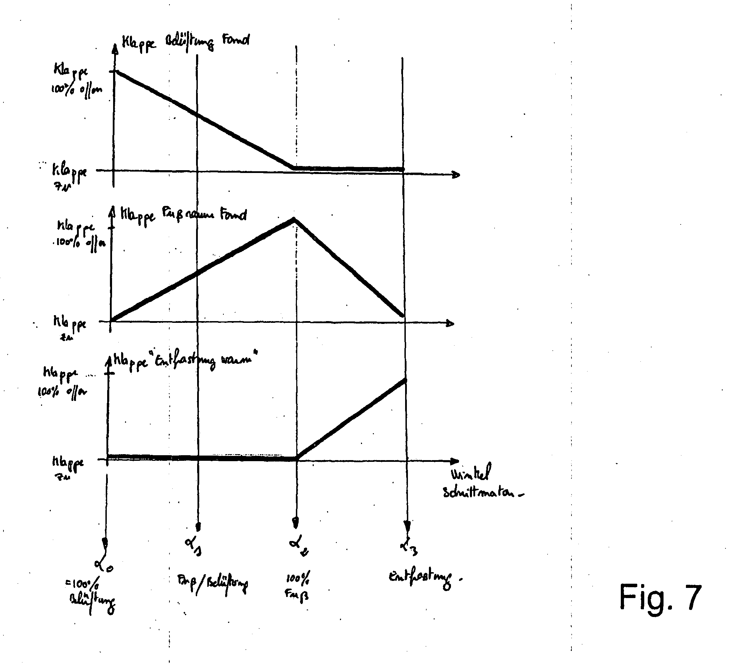

Eine weitere Klappe 15, im Folgenden auch als Verteilungs-Klappe bezeichnet, regelt den Austritt zu den verschiedenen Luftkanälen, die zum Fondbereich führen (vgl. Fig. 6). Hierbei sind an einer Welle mehrere Klappenelemente, vorliegend für die Belüftung des Fondbereichs und den Fußraum im Fondbereich, jeweils unterteilt in rechts und links, angeordnet, die auf an sich bekannte Weise unterschiedliche Luftkanäle freigeben oder verdecken. Die Steuerung der Klappe 15 ist in Fig. 7 in den beiden oberen Diagrammen dargestellt.

Ferner ist eine Klappe 16, im Folgenden auch als Defrost-Klappe bezeichnet, vorgesehen, die eine Zusammenführung der warmen Front- und Fond-Luftströme ermöglicht, so dass zum Entfrosten der gesamte Heizer 8 und Zuheizer 9 Wärme an die beiden von der Trennwand getrennten Luftströme abgibt, und die gesamte Luftströmung und Heizleistung zum Enteisen oder zum Entfernen eines Beschlags von der Frontscheibe zur Verfügung steht. Da der gesamte normalerweise dem Fondbereich zugeführte Luftstrom dem Luftstrom des Frontbereichs zugeführt wird, erfolgt in diesem Betriebszustand erfolgt keine Temperierung des Fondbereichs. Bei der Klappe 16 handelt es sich um eine einfache Klappe, deren Schwenkachse im Bereich der Außenwand des Gehäuses 2 angeordnet ist, wobei sie an der Grenze zwischen dem Teil des Gehäuses 2, das bei der Basisversion und der mehrzonigen Version vorhanden ist, und dem Teil des Gehäuses 2, das nur bei der mehrzonigen Version vorhanden ist, im Bereich der mehrzonigen Version angeordnet ist. Die Steuerung der Klappe 16 erfolgt in Abhängigkeit von der Steuerung der Klappe 15 entsprechend dem untersten Diagramm von Fig. 7. Für die Einstellung der entsprechenden Winkelstellungen ist ein Winkel-Schrittmotor (nicht dargestellt) vorgesehen, welcher über Getriebe mit den Wellen der Klappen 15 und 16 verbunden ist. Wie aus Fig. 7 ersichtlich, sind im Betriebszustand 100% Belüftung (α₀) lediglich die Klappenelemente der Klappe 15 offen, welche die Luftkanäle zur Fondbelüftung freigeben oder verschließen. Im Betriebszustand 50% Belüftung und 50% Fußraum (α₁) sind sämtliche Klappenelemente der Klappe 15 etwa zu 50% geöffnet. Im Betriebszustand 100% Fußraum (α₂) sind lediglich die Klappenelemente der Klappe 15 offen, welche die Luftkanäle zum Fondfußraum freigeben oder verschließen. Erfolgt eine Umstellung auf Defrostbetrieb, so bleiben die Klappenelemente der Klappe 15 geschlossen, die zur Regelung der Fondbelüftung dienen, die Klappenelemente, die zur Regelung der Fußraumbelüftung dienen, werden in Abhängigkeit der Einstellung geschlossen und die Klappe 16 wird entsprechend geöffnet, bis in der Endstellung "Entfrosten" (α₃) die Klappe 15 vollständig geschlossen und die Klappe 16 vollständig geöffnet ist, so dass die gesamte Luft dem Frontbereich zur Verfügung gestellt wird.

Gemäß einer nicht in der Zeichnung dargestellten Variante ist für die mehrzonige Kraftfahrzeug-Klimaanlage ein spezielles ausgebildetes Gehäuse vorgesehen, in welchem die Bauteile, wie Gebläse, Filter, Verdampfer, Heizer, Zuheizer entsprechend der Anordnung bei der Basisversion angeordnet sind. Dabei werden die gleichen Klappen wie bei der Basisversion verwendet. Ferner sind zusätzliche Klappen für die Regelung der Luftströme zu den zusätzlichen Klimazonen vorgesehen. Der Vorteil eines ausschließlich für die Basisversion und eines ausschließlich für die erweiterte Version vorgesehenen Gehäuses ist, dass die Luftkanäle auf den speziellen Anwendungsfall ausgelegt werden können und dass zusätzliche Trennwände nicht von Hand eingebaut werden müssen. Die Statikberechnungen und Berechnungen für den Strömungsverlauf bis zur Aufspaltung des Luftstroms und gegebenenfalls auch bis zu einer Veränderung des Strömungsquerschnitts der durch eine Trennwand getrennten Luftströme erübrigen sich im Wesentlichen. Entsprechendes gilt für die Anbringung der Aktuatoren für die Klappen, die bei beiden Versionen gleich ausgebildet sind. Ferner können bei beiden Versionen im Wesentlichen die gleichen Bauteile verwendet werden, die Bauteile, die sich unterscheiden, wie beispielsweise die zusätzliche Defrost-Klappe bei der mehrzonigen Version, sind relativ kostengünstig, wodurch sich auch im Falle unterschiedlicher Gehäuse ein erheblicher Preisvorteil gegenüber herkömmlichen Kraftfahrzeug-Klimaanlagen ergibt.

### Bezugszeichenliste

- 1: Kraftfahrzeug-Klimaanlage
- 1: Gebläse
- 3: Filter
- 4: Verdampfer
- 5: erste Mischklappe
- 6: Mischraum
- 7: zweite Mischklappe
- 8: Heizer
- 9: Zuheizer
- 10: Gehäuse
- 11: Bereich
- 12: Trennwand
- 13: Außenwand
- 14: Mischklappe (Fondbereich)
- 15: Klappe
- 16: Defrost-Klappe

## Patentansprüche

1. Klimaanlage, insbesondere Kraftfahrzeug-Klimaanlage, wobei ein Teil des Gehäuses (10) für verschieden-zonige Klimaanlagen unterschiedlich ausgebildet ist, und zumindest die Anordnung eines Gebläse (2), eines Verdampfers (4) und eines Heizers (8) bei den verschieden-zonigen Klimaanlagen gleich ist, wobei das Gehäuse (10) der Klimaanlage (1) fürverschiedene Versionen variiert ausgebildet und/oder durch Anbau- oder Austauschteile verändert sein kann, und wobei bei einer mehrzonigen Ausgestaltun der Klimaanlage (1) in einem Bereich des Gehäuses (10) ein Bypass für den Fondbereich vorgesehen ist, der am Heizer (8) vorbeiführt, wobei der Bypass in einem Bereich ausgebildet ist, der bei einer geringerzonigen Klimaanlage (1) ungenutzt ist, wobei bei der mehrzonigen Klimaanlage (1) im variiert ausgebildeten Teil des Gehäuses (10) oder im Anbau- oder Austauschteil angeordnet eine Mischklappe (14) zur Lufttemperierung für den Fondbereich vorgesehen ist und
bei der mehrzonigen Klimaanlage (1) im variiert ausgebildeten Teil des Gehäuses (10) oder im Anbau- öder Austauschteil angeordnet Klappen (15) zur Luftverteilung für die Belüftung und den Fußbereich im Fondbereich vorgesehen sind **dadurch gekennzeichnet, dass** bei der mehrzonigen Klimaanlage (1) im variiert ausgebildeten Teil des Gehäuses (10) oder im Anbau- oder Austauschteil angeordnet eine Defrost-Klappe (16) für den Defrostbetrieb vorgesehen ist, welche im Defrostbetrieb ein Einleiten des warmen Fondluftstroms in den warmen Frontluftstrom ermöglicht, wobei: bei der mehrzonigeh Klimaanlage (1) im variiert ausgebildeten Teil des Gehäuses (10) oder im Anbau- oder Austauschteil angeordneten Klappen (15, 16) zur Luftverteilung für die Belüftung und den Fußbereich im Fondbereich und für den Defrostbetrieb gekoppelt sind.

2. Klimaanlage nach Anspruch 1, **dadurch gekennzeichnet, dass** die Klimaanlage (1) mindestens eine Mischklappe (14) aufweist, die als Schmetterlings-Klappe ausgebildet ist.

3. Klimaanlage nach Anspruch 2, **dadurch gekennzeichnet, dass** die als Schmetteriings-Klappe ausgebildete Mischklappe (14) die Mischklappe für den Fondbereich ist.

4. Klimaanlage nach Anspruch 2 oder 3, **dadurch gekennzeichnet, dass** die Mischklappen (5, 7,14) für den Front- und den Fondbereich als Schmetterlings-Klappen ausgebildet sind.

5. Klimaanlage nach einem der vorhergehenden Ansprüchen, **dadurch gekennzeichnet, dass** im in ein Kraftfahrzeug eingebauten Zustand der Klimaanlage (1) der Bypass räumlich unterhalb des Heizers (8) verlaufend angeordnet ist.

## Claims

1. An air conditioning system, in particular a motor vehicle air conditioning system, in which part of the housing (10) is designed differently for air conditioning systems with different zones and at least the arrangement of a fan (2), an evaporator (4) and a heater (8) is identical in the air conditioning systems with different zones, it being possible to design the housing (10) of the air conditioning system (1) differently for different versions and/or to modify it by means of add-on or interchangeable parts, and in a multi-zone design of the air conditioning system (1) there being provided in one area of the housing (10) a bypass for the rear area which bypasses the heater (8), the bypass being configured in an area which is not used in an air conditioning system (1) with fewer zones, wherein in the multi-zone air conditioning system (1) a mixer valve (14) positioned in the part of the housing (10) of variable design or in the add-on or interchangeable part being provided for controlling the air temperature in the rear area, and in the multi-zone air conditioning system (1) valves (15) positioned in the part of the housing (10) of variable design or in the add-on or interchangeable part being provided for air distribution for the ventilation and the foot well in the rear area, **characterised in that** in the multi-zone air conditioning system (1) a defrost valve (16) positioned in the part of the housing (10) of variable design or in the add-on or interchangeable part is provided in defrost mode, allowing the warm rear air stream to be introduced into the warm front air stream in defrost mode, wherein in the multi-zone air conditioning system (1) valves (15, 16) positioned in the part of the housing (10) of variable design or in the add-on or interchangeable part being coupled for air distribution for the ventilation and the foot well in the rear area and for defrost mode.

2. An air conditioning system in accordance with claim 1, **characterised in that** the air conditioning system (1) has at least one mixer valve (14) which is designed as a butterfly valve.

3. An air conditioning system in accordance with claim 2, **characterised in that** the mixer valve (14) designed as a butterfly valve is the mixer valve for the rear area.

4. An air conditioning system in accordance with claim 2 or 3, **characterised in that** the mixer valves (5, 7, 14) for the front and rear areas are designed as butterfly valves.

5. An air conditioning system in accordance with one of the preceding claims, **characterised in that** when the air conditioning system (1) is mounted in a motor vehicle the bypass is positioned such that it runs spatially beneath the heater (8).

## Revendications

1. Système de climatisation, en particulier système de climatisation pour véhicule automobile, où une partie du carter (10) est conçue différemment pour des systèmes de climatisation comportant différentes zones, et au moins l'agencement d'un pulseur (2), d'un évaporateur (4) et d'un dispositif de chauffage (8) est identique dans le cas des systèmes de climatisation comportant différentes zones, où le carter (10) du système de climatisation (1) est conçu de façon variée pour différentes versions et/ou peut être modifié par des pièces rapportées ou par des pièces de rechange, et où, dans le cas d'une conception du système de climatisation (1), à zones multiples, il est prévu, dans un secteur du carter (10), une dérivation pour la partie arrière, laquelle dérivation passe devant le dispositif de chauffage (8), où la dérivation est conçue dans un secteur qui est inutilisé dans le cas d'un système de climatisation (1) comportant moins de zones où, dans le cas du système de climatisation (1) à zones multiples, il est prévu un volet mélangeur (14) qui sert à équilibrer la température de l'air pour la partie arrière et qui est disposé dans la partie du carter (10) conçue de façon variée ou bien disposé dans la pièce rapportée ou dans la pièce de rechange et, dans le cas du système de climatisation (1) à zones multiples, il est prévu des volets (15) qui servent à la répartition d'air pour la ventilation et pour la zone des pieds située dans la partie arrière et qui sont disposés dans la partie du carter (10) conçue de façon variée ou bien disposés dans la pièce rapportée ou dans la pièce de rechange, **caractérisé en ce que**, dans le cas du système de climatisation (1) à zones multiples, il est prévu un volet de dégivrage (16) pour le fonctionnement en mode dégivrage, disposé dans la partie du carter (10) conçue de façon variée ou bien disposé dans la pièce rapportée ou dans la pièce de rechange, lequel volet, au cours du fonctionnement en mode dégivrage, permet d'introduire le flux d'air chaud en circulation à l'arrière, dans le flux d'air chaud en circulation à l'avant où, dans le cas du système de climatisation (1) à zones multiples, des volets (15, 16) servant à la répartition d'air pour la ventilation et pour la zone des pieds située dans la partie arrière et pour le fonctionnement en mode dégivrage sont couplés et disposés dans la partie du carter (10) conçue de façon variée ou bien disposés dans la pièce rapportée ou dans la pièce de rechange.

2. Système de climatisation selon la revendication 1, **caractérisé en ce que** le système de climatisation (1) présente au moins un volet mélangeur (14) qui est conçu comme un volet papillon.

3. Système de climatisation selon la revendication 2, **caractérisé en ce que** le volet mélangeur (14) conçu comme un volet papillon est le volet mélangeur pour la partie arrière.

4. Système de climatisation selon la revendication 2 ou 3, **caractérisé en ce que** les volets mélangeurs (5, 7, 14) pour les parties avant et arrière sont conçus comme des volets papillon.

5. Système de climatisation selon l'une quelconque des revendications précédentes, **caractérisé en ce que**, lorsque le système de climatisation (1) est monté dans un véhicule automobile, la dérivation est agencée en passant physiquement au-dessous du dispositif de chauffage (8).
